Europäisches Patentamt

European Patent Office

Office européen des brevets

(19)

(11) Veröffentlichungsnummer: **0 040 693**
**B1**

(12) # EUROPÄISCHE PATENTSCHRIFT

(45) Veröffentlichungstag der Patentschrift:
15.02.84

(21) Anmeldenummer: 81102813.3

(22) Anmeldetag: 13.04.81

(51) Int. Cl.³: **D 04 H 1/72**

(54) Verfahren und Vorrichtung zur Herstellung von Fasermatten.

(30) Priorität: 25.04.80 DE 3016114
20.06.80 DE 3023016

(43) Veröffentlichungstag der Anmeldung:
02.12.81 Patentblatt 81/48

(45) Bekanntmachung des Hinweises auf die Patenterteilung:
15.02.84 Patentblatt 84/7

(84) Benannte Vertragsstaaten:
AT BE CH DE FR GB IT LI LU NL SE

(56) Entgegenhaltungen:
FR - A - 2 311 127
FR - A - 2 336 506
FR - A - 2 413 204
US - A - 4 003 105

(73) Patentinhaber: BAYER AG, Zentralbereich Patente, Marken und Lizenzen, D-5090 Leverkusen 1, Bayerwerk (DE)

(72) Erfinder: Muschelknautz, Edgar, Prof.Dr., Carl-Rumpff-Strasse 33, D-5090 Leverkusen 1 (DE)
Erfinder: Rink, Norbert, Dr., Bahnhofstrasse 38, D-4047 Dormagen 1 (DE)

# Verfahren und Vorrichtung zur Herstellung von Fasermatten

Die vorliegende Erfindung betrifft ein Verfahren zur Herstellung von Matten aus organischen oder anorganischen Fasern sowie eine Vorrichtung zur Durchführung des Verfahrens.

Matten sind räumliche Gebilde aus regellos angeordneten Fasern, deren Raumdichte zwischen 1/10 und 1/1000 der Dichte der Einzelfaser liegen kann. Werden Endlosfasern zur Mattenherstellung eingesetzt, erhält die Matte ihren Zusammenhalt durch gegenseitiges regelloses Umschlingen der Einzelfasern. Bei Matten aus Kurzfasern müssen die Einzelfasern an ihren Kreuzungspunkten durch Bindemittel verklebt werden. Als Kurzfasermatten werden bisher insbesondere Mineralfasermatten hergestellt. Die Eigenschaften solcher Matten hängen sowohl von den Eigenschaften der Einzelfaser wie Elastizität, Biegefestigkeit, Durchmesser und Länge, als auch von der Raumdichte, der Anordnung der Fasern zueinander und der Menge und Verteilung des Bindemittels ab.

Die meisten Fasermatten werden für Wärmedämmung verwendet. Dafür sollten im Idealfall die Mehrzahl der Fasern in der Mattenebene quer zum Wärmestrom und in möglichst gleichmässiger Verteilung ausgerichtet sein.

Es wird auch in der Regel angestrebt, dass die Matten in ihrer Längs- und Querausdehnung eine möglichst gute Formstabilität aufweisen und in ihrer Dickenausdehnung ein möglichst gutes elastisches Kompressionsvermögen aufweisen. Zum Beispiel werden Glasfasermatten geringer Raumdichte für die Lagerung und den Transport, z.B. durch Aufrollen der Matte unter Druck auf 1/6 ihrer Dicke für die Dauer mehrerer Tage oder Wochen komprimiert. Nach der Entspannung bei der Verarbeitung der Matte soll möglichst die ursprüngliche Mattendicke reproduziert werden.

Die Formstabilität wird insbesondere dadurch beeinträchtigt, dass während der Deformation der Matte Faserbrüche auftreten. Beim Aufrollen oder Pressen von Matten widerstehen am leichtesten diejenigen Einzelfasern, die in der Matte senkrecht zu den auftretenden Kräften angeordnet sind. Es ist daher wünschenswert, die Fasern vorwiegend in der Ebene der Längs- und Querausdehnung der Matte anzuordnen. Andererseits ist es für den Zusammenhalt der Matte notwendig, dass eine gewisse Anzahl von Fasern in Richtung der Dicke der Matte ausgerichtet sind, damit die Matte nicht in Schichten desintegriert.

Ein weiteres Problem der Mattenherstellung ist es, innerhalb der Matte eine möglichst gleichmässige Dichte zu erzeugen. Sowohl die elastische Kompressibilität, die Wärmedämmeigenschaften, als auch der Zusammenhalt der Matte werden durch Dichteschwankungen innerhalb der Matte beeinträchtigt. Es wird beim Aufbau der Rohmatte daher angestrebt, die Fasern möglichst einzeln der Matte zuzuführen. Nun werden die Fasern der im Aufbau begriffenen Matte in einem relativ schnell strömenden Gasstrom suspendiert zugeführt, wobei der Gasstrom beim Hindurchtritt durch den bereits gebildeten Mattenanteil die Fasern abgibt. Wirbelbildungen und Überholvorgänge verschieden schneller Fasern in dem Gasstrom führen nun dazu, dass Fasern bereits in einiger Entfernung vor der Ablagestelle aufeinandertreffen, sich gegenseitig „verhaken" und „Knäuel" oder „Faserwolken" bilden. Solche Fasergespinste fangen auf dem weiteren Weg durch die gleichen Vorgänge weitere Einzelfasern ein und vergrössern sich laufend. Auch elektrostatische Kräfte können dabei im Spiel sein. Solche im Flug gebildeten Gespinste haben eine deutlich andere Struktur als die bei der eigentlichen Mattenbildung aus Einzelfasern entstehende Struktur. Sie verursachen je nach ihrem Anteil und ihrer Grösse erhebliche Inhomogenitäten. Auf dem Markt erhältliche Matten bestehen überwiegend aus solchen Wolken oder Gespinsten mit Abmessungen von einigen Zentimetern bis einigen Dezimetern, was durch „Zerpflücken" der Matten leicht feststellbar ist.

Die FR-A Nr. 2336506 beschreibt ein Verfahren zur Faserablage, bei dem die in einem Gas dispergierten Fasern aus einem Kanal in einer Richtung, die eine Komponente in Bewegungsrichtung des Transportbandes aufweist, auf das Transportband unter Absaugung des Transportgases auftreffen. Jedoch wurde die Bedeutung einer gezielten Richtungsführung der Faser/Gas-Dispersion zwischen Kanal und Transportband nicht erkannt.

Aufgabe der vorliegenden Erfindung ist es daher, ein Verfahren und eine Vorrichtung bereitzustellen, welche eine solche gezielte Richtungsführung der Dispersion aus anorganischen oder organischen Fasern und Gas unmittelbar vor der Ablage im Hinblick auf die eingangs genannten Anforderungen erlauben.

Gegenstand der vorliegenden Erfindung ist ein Verfahren zur Herstellung von Matten aus organischen oder anorganischen Fasern, bei dem Faserabschnitte in strömendem Gas dispergiert aus einem Kanal 2 austreten und auf einem perforierten Transportband 41 zur Bildung der Matte 42 abgelegt werden, wobei das Gas unterhalb des Transportbandes abgesaugt wird, das Transportband 41 mit der Gasströmungsrichtung am Kanalaustritt einen Winkel von 90-150°, vorzugsweise 100 bis 120°, bildet und die Gasströmung zwischen Kanal 2 und Transportband 41 Umgebungsluft oder rezirkuliertes Gas mitnimmt, bei welchem

a)  in Verlängerung des Kanals 2 einseitig in Richtung des Transportbandes ein gekrümmter Leitkörper 31 so angeordnet ist, dass die Gasströmung nach dem Austritt aus dem Kanal durch Coanda-Effekt des Leitkörpers in Richtung des Transportbandes umgelegt wird, und

b)  die Umgebungsluft an der dem Leitblech gegenüberliegenden Seite des Kanals 2 zwischen Transportband 41 und der Unterkante des Kanals 2 in einer Richtung von 45 bis 90° zur Gasströmungsrichtung am Kanalaustritt in Richtung der Bewegung des Transportbandes in den Bereich der Faserablage einströmt, und

c) das Absaugen der Gesamtströmung am Transportband derart erfolgt, dass das die Fasern tragende Gas unter zweifacher Umlenkung einen S-förmigen Weg zum Transportband 41 nimmt, wobei die Strömungsrichtung am Wendepunkt einen Winkel von 0 bis 30° zum Transportband hat.

Ferner ist Gegenstand der Erfindung eine Vorrichtung, die zur Durchführung des erfindungsgemässen Verfahrens geeignet ist.

Die angegebenen Ziffern beziehen sich auf die nachfolgend näher beschriebenen Figuren:

Fig. 1 zeigt den Querschnitt durch eine erste Ausführungsform der erfindungsgemässen Vorrichtung;

Fig. 2 zeigt einen Querschnitt durch eine erfindungsgemässe Vorrichtung, wobei einzelne Elemente in alternativen Ausführungsformen dargestellt sind;

Fig. 3 zeigt eine perspektivische Darstellung des erfindungsgemässen Verfahrens im Zusammenhang mit einer speziellen Fasererzeugungsvorrichtung;

Fig. 4 zeigt eine spezielle Ausführungsform des Kanals.

Die in den Figuren angegebenen Ziffern bezeichnen im einzelnen, wobei gleiche Ziffern in verschiedenen Figuren sich auf analoge Elemente beziehen:

1    Vorrichtung zur Fasererzeugung
11   Schmelzetiegel
12   Blasdüse
13   Zerfaserungsflamme
2    Kanal
21   Einströmteil des Kanals
22   Unterschalldiffusor
23   Eintrittskonus
24   Übergangsteil
25   Strömungstrennbleche im Kanal
3    Bereich der Umlenkung der Strömung
31   Leitkörper
32   Ansaugluft oder rezirkuliertes Gas
33   Leitblech
34   Leitblech
35   Bindemittelsprühvorrichtung
36   Gasabsaugung
4    Absaugbereich und Faserablage
41   Transportband
42   Fasermatte
43   Strömungsrichtung
44   Drosselklappe
45   Konturbleche
46   Böschungswinkel der Matte
47   Umgebungsluft bandabwärts

Das Verfahren zur Mattenherstellung besteht im allgemeinen aus einer Zerfaserungseinheit 1, in der die Fasern als in einem Gasstrom dispergierte Einzelfasern anfallen. Das Gas, das im allgemeinen bereits das Ausziehen der Fasern bewirkt hat, dient im folgenden als Transportmedium für die Fasern und tritt in einen Kanal 2 ein, durch den es zur Mattenbildung gefördert wird. In dem Kanal soll sich eine möglichst gerichtete Strömung ohne Wirbel und Rückströmung einstellen und aufrechterhalten werden, um die eingangs beschriebene Wolkenbildung zu unterdrücken. Die Form des Kanals kann entsprechend der gegenseitigen geometrischen Lage von Fasererzeugungseinheit und Faserablage gestaltet werden. Zum Beispiel können Abwinkelungen enthalten sein, wenn der Krümmungsradius nicht zu klein gewählt wird. Ferner kann ein Übergang von einer z.B. rotationssymmetrischen Fasererzeugungseinheit zu einem schlitzförmigen Kanalaustritt zur Erzeugung einer breiten Faserablage vorgesehen sein. Bevorzugt werden Fasererzeugungseinheit und Faserablage so zueinander angeordnet, dass ein geradliniger Kanal nicht zu grosser Länge eingesetzt werden kann.

Im allgemeinen hat das Gas unmittelbar nach der Zerfaserung noch eine sehr hohe Strömungsgeschwindigkeit, die meistens im Schall-nahen Bereich liegt. In diesem Fall wird bevorzugt ein Unterschalldiffusor als Kanal eingesetzt, so dass die Gasgeschwindigkeit beim Durchströmen des Kanals reduziert wird. Bevorzugt soll die Gasgeschwindigkeit am Austritt des Kanals zwischen 5 und 20 m/s betragen.

Nach dem Austritt des die Fasern tragenden Gasstromes aus dem Kanal erfolgt eine zweifache Umlenkung des Faserstroms, zuerst in Richtung der Bewegung des Transportbandes und danach wieder in Richtung auf die Senkrechte zum Transportband. Die erste Umlenkung erfolgt in der Hauptsache durch Coanda-Effekt an einem gekrümmten Leitkörper und zu einem kleineren Teil auch durch die zwischen der die Fasern enthaltenden Gasströmung des Kanals 2 und dem Transportband zuströmende Umgebungsluft oder dort rezirkuliertes Gas. Der Coanda-Effekt allein reicht aus, um die Hauptströmung umzulenken. Die Vermischung des die Fasern tragenden Transportgases mit der zuströmenden Umgebungsluft bewirkt ferner eine weitere Reduktion der Strömungsgeschwindigkeit des Gases und damit der Fasern. Die zweite Ablenkung zur Bildung eines S-förmigen Strömungsweges wird durch Absaugung des Gases unterhalb des Transportbandes in Richtung senkrecht zum Transportband bewirkt. Da sich die Fasern in dem Gas bevorzugt senkrecht zur Strömung ausrichten, erfolgt die Ablage der Fasern bevorzugt so, dass sie in der Böschungsebene der sich aufbauenden Matte ausgerichtet sind, wobei der grössere Teil quer zur Richtung des Transportbandes liegt. Bei geringem Böschungswinkel 46 ist der Anteil der senkrecht zur Mattenebene ausgerichteten Fasern klein, bei grossem Böschungswinkel grösser. Der Böschungswinkel wird zusammen mit der Bandgeschwindigkeit sowohl durch den Winkel der fasertragenden Gasströmung am Wendepunkt wie auch durch die Länge der Absaugzone und die dort vorgenommene Verteilung der Absaugmengen beeinflusst. Da die Ausrichtung der Fasern im strömenden Gas jedoch nur im statistischen Mittel senkrecht zur Strömungsrichtung erfolgt, befindet sich im Augenblick des Auftreffens auf die Rohmatte auch eine hinreichende Zahl von Fasern in einer solchen Orientierung, dass sie in die Matte hineingeschossen werden und damit zum Zusammenhalt der Matte beitragen.

Das Absaugen der Luft unter dem Transportband erfolgt vorzugsweise so, dass am Anfang wenig, im Bereich der Böschung der grösste Teil und danach noch der Rest abgesaugt wird, wobei im Bereich der Böschung die abgesaugte Menge laufend steigt. Es kann auch zweckmässig sein, im letzten Abschnitt nicht nur die von der die Fasern tragenden Hauptströmung mitgerissene Umgebungsluft oder rezirkuliertes Gas abzusaugen, sondern auch noch einen weiteren kleinen Teil aus der übrigen Umgebung 47 bandabwärts der eigentlichen Absaugezone.

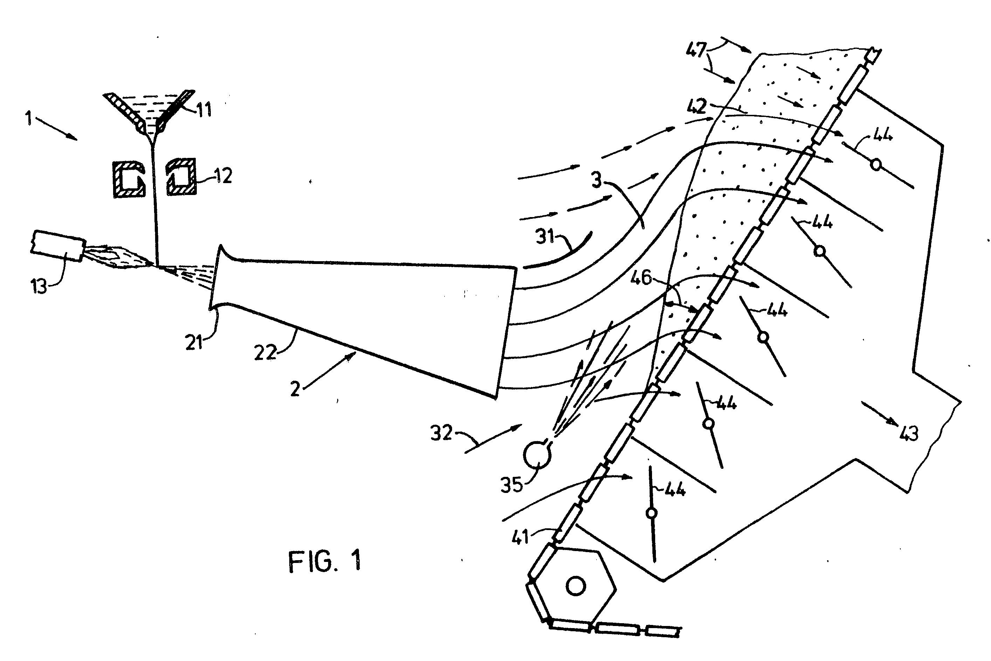

In Fig. 1 ist eine erfindungsgemässe Vorrichtung dargestellt. Als Fasererzeugungsvorrichtung ist das Düsenzieh-Blasverfahren zur Herstellung superfeiner Fasern im Bereich von 2 bis 5 µ dargestellt. Bei diesem Verfahren treten aus einem Schmelztiegel 11 Schmelzeströme aus, die in einer Ziehdüse 12 zunächst zu Fäden zwischen 20 und 50 µ Dicke ausgezogen werden und danach in einen Brenner 13 eintreten, in dem der Primärfaden durch die Verbrennungsgase hoher Geschwindigkeit zerfasert wird. Die Fäden entstehen also in einem im wesentlichen horizontal strömenden Verbrennungsgasstrom. In der Praxis besteht der Tiegel 11 aus einer länglichen senkrecht zur Zeichenebene ausgedehnten Rinne mit z.B. 100 oder mehr Schmelzeausflussöffnungen, die durch eine schlitzförmige, senkrecht zur Zeichenebene ausgedehnte Schlitzedüse 12 hindurchtreten und zu Primärfäden ausgezogen werden. Für jeden Faden ist entweder ein Brenner 13 vorgesehen oder für alle Fäden ein gemeinsamer Brenner, der eine entsprechend senkrecht zur Zeichnungsebene ausgedehnte Flammenwand erzeugt. Die Flammengase treten nun nach Abkühlung durch Vermischung mit Umgebungsluft mit den darin suspendierten Fasern in den Kanal 2 ein. Der Kanal 2 selbst besteht aus einem Düsen-artigen Eintrittsteil 21 und einem Unterschalldiffusor 22, in dem die Strömungsgeschwindigkeit der Gase auf 5 bis 20 m/s reduziert wird.

Am Austrittsende des Diffusors ist ein Leitblech 31 vorgesehen, an das sich die Gasströmung aufgrund des Coanda-Effektes anlegt, so dass sich das Gas entsprechend den gezeichneten Stromlinien weiterbewegt. Ferner ist eine Sprühvorrichtung 35 vorgesehen, mit der das Bindemittel zum Verkleben der Fasern in den Umlenkbereich 3 der Strömung eingeblasen wird. Durch die Sprührichtung des Bindemittels wird die Umlenkung des strömenden Gases und der Fasern noch unterstützt. Gleichzeitig strömt von der dem Leitblech 31 gegenüberliegenden Seite des Unterschalldiffusors 22 Umgebungsluft in den Umlenkbereich 3 ein.

Ferner ist das Transportband 41 in Form eines Gliederbandes dargestellt. Der Raum unterhalb des Transportbandes 41 ist in Kammern aufgeteilt. Jede der Kammern enthält Drosselklappen 44, so dass der Strömungswiderstand durch jede der Kammern individuell eingestellt werden kann. In Richtung des Pfeils 43 wird das Gas abgesaugt.

Die Drosselklappen 44 werden vorzugsweise so justiert, dass die vorher beschriebene Gasmengenverteilung erreicht wird. Beim Hindurchtritt des Gases durch das Transportband bzw. die im Aufbau begriffene Matte 42 werden die Fasern auf dem Transportband abgelegt. Die Strömungsgeschwindigkeit des Gases im Augenblick der Ablage der Fasern beträgt 1 bis 10 m/s vorzugsweise 3 bis 5 m/s.

Besonders bevorzugt wird die durch das Transportband hindurch abgesaugte Gasmenge abschnittsweise in mindestens zwei Sektionen gedrosselt, so dass in den ersten, noch nicht von Fasern bedeckten Abschnitten des Transportbandes eine mittlere Strömungsgeschwindigkeit durch das Transportband von 1 bis 4 m/s eingehalten wird und in den folgenden, bereits von Fasern bedeckten Abschnitten Durchtrittsgeschwindigkeiten von 4 bis 10 m/s eingehalten werden.

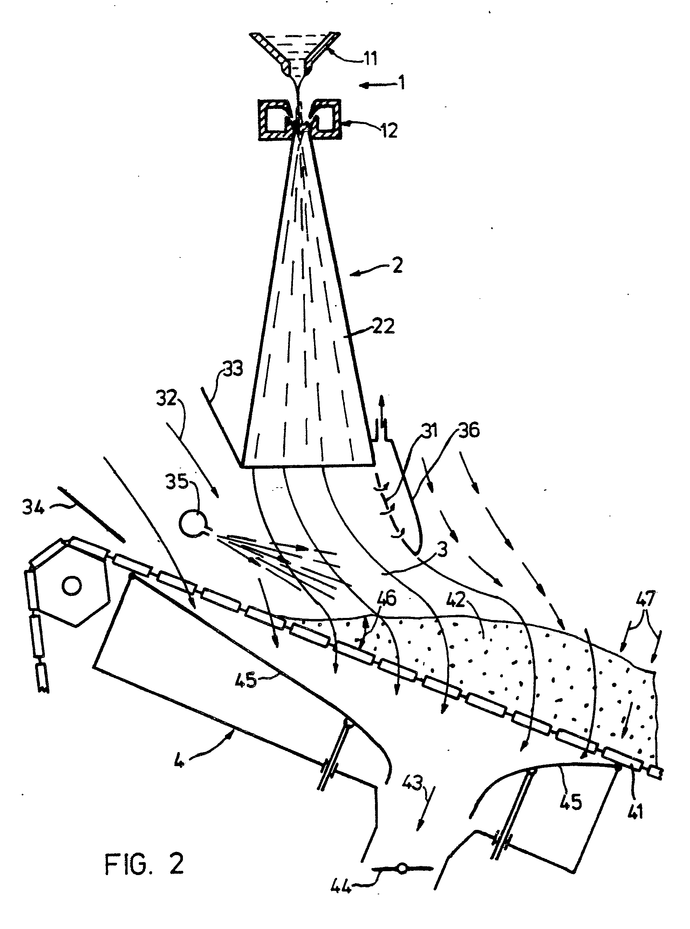

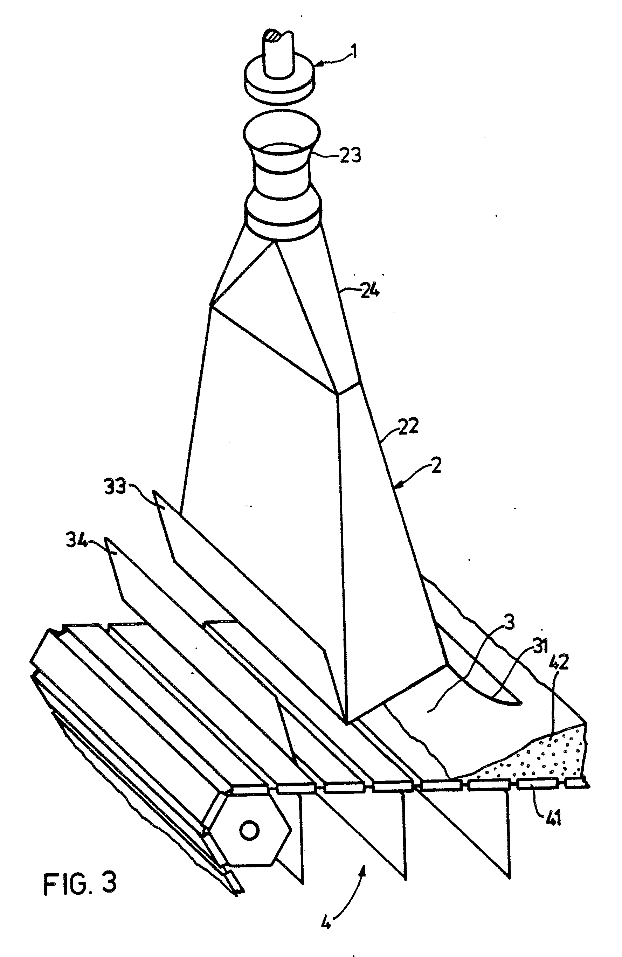

Die Ausführungsform der Erfindung nach Fig. 2 zeigt eine nach dem Düsenblasverfahren arbeitende Fasererzeugungsvorrichtung 1. Dabei treten aus einem senkrecht zur Zeichnungsebene länglichen Schmelzetiegel 11 eine Vielzahl von in einer Reihe angeordneten Schmelzeströmen aus, die in einer nachgeschalteten schlitzförmigen Zerfaserungsdüse 12 zerfasert werden. Der Kanal 2 ist wieder als Unterschalldiffusor 22 ausgebildet. Das am Austrittsende des Unterschalldiffusors angeordnete Leitblech 31 ist perforiert und weist einen Absaugkasten 36 auf. Durch den Absaugkasten wird zur Unterstützung der Umlenkung der Transportgasströmung Transportgas abgesaugt. Die Absaugung erfolgt vorzugsweise in dem Masse, wie aufgrund der Umlenkung eine Separation der Fasern aus dem Transportgas erfolgt, so dass ein Anhaften von Fasern an dem Leitblech 31 vermieden wird. An der gegenüberliegenden Seite des Kanals 2 sind zusätzlich Leitbleche 33 und 34 angeordnet, die die in den Bereich zwischen Transportband und Hauptströmung einströmende Umgebungsluft richten. Unterhalb des Transportbandes sind anstelle von mit Drosselklappen versehenen Absaugkästen justierbare Konturbleche 45 vorgesehen, durch die der Strömungswiderstand unterhalb des Transportbandes 41 so eingestellt werden kann, dass die gewünschte Verteilung der Absaugmenge erreicht wird. Die Ausführungsform nach Fig. 3 zeigt eine nach dem Trommelschleuderblasverfahren (TEL-Verfahren) arbeitende Fasererzeugungsvorrichtung 1. Die Fasern treten hier mit dem Blasgasstrom in ein trichterförmiges Einlassende 23 des Kanals 2 mit rotationssymmetrischem Querschnitt ein. Der Kanal 2 weist ferner einen Übergangsteil 24 auf, dem sich der Unterschalldiffusor 22 anschliesst.

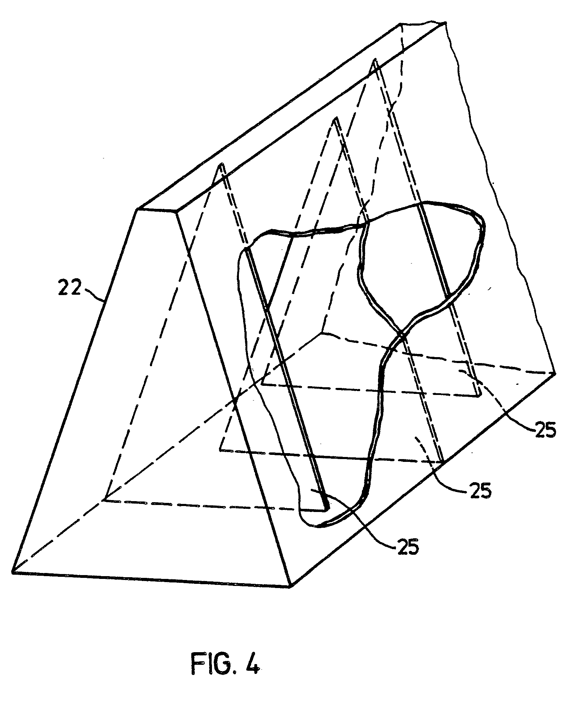

Fig. 4 zeigt einen erfindungsgemäss als Kanal 2 einzusetzenden Unterschalldiffusor in teilweise aufgeschnittener Form. Die Tiefe eines solchen Diffusors kann sich über die ganze Breite der Fasermatte erstrecken. Es wird dann erfindungsgemäss vorgeschlagen, Strömungstrennbleche 25 in dem Kanal vorzusehen, die eine Querströmung verhindern. Damit eine Ablagerung von Fasern auf der Oberkante der Strömungstrennbleche vermieden wird, erstrecken sich die Strömungstrennbleche 25 nicht über die ganze Breite des Diffusors, sondern sind nur einseitig an einer Diffusorwand befestigt. Die freie Kante, die im wesentlichen parallel zur anderen Diffusorwand verläuft, bildet nun einen spitzen Winkel zur Strömungsrichtung des Gases. Auf diese Kante auftreffende Fasern können auf der Kante abgleiten, ohne den Diffusor zu verstopfen. Vorzugsweise werden die einzelnen Strömungstrennbleche alternierend an den beiden Diffusorwänden befestigt. Die Figur zeigt einen Diffusor 22 in perspektivischer Ansicht, wobei die eine Wand teilweise aufgeschnitten ist.

## Patentansprüche

1. Verfahren zur Herstellung von Matten aus organischen oder anorganischen Fasern, bei dem Faserabschnitte in strömendem Gas dispergiert aus einem Kanal (2) austreten und auf einem perforierten Transportband (41) zur Bildung der Matte (42) abgelegt werden, wobei das Gas unterhalb des Transportbandes abgesaugt wird, das Transportband (41) mit der Gasströmungsrichtung am Kanalaustritt einen Winkel von 90-150°, vorzugsweise 100 bis 120°, bildet und die Gasströmung zwischen Kanal (2) und Transportband (41) Umgebungsluft oder rezirkuliertes Gas mitnimmt, dadurch gekennzeichnet, dass

a) in Verlängerung des Kanals (2) einseitig in Richtung des Transportbandes ein gekrümmter Leitkörper (31) so angeordnet ist, dass die Gasströmung nach dem Austritt aus dem Kanal durch Coanda-Effekt des Leitkörpers in Richtung des Transportbandes umgelegt wird, und

b) die Umgebungsluft an der dem Leitblech gegenüberliegenden Seite des Kanals (2) zwischen Transportband (41) und der Unterkante des Kanals (2) in einer Richtung von 45 bis 90° zur Gasströmungsrichtung am Kanalaustritt in Richtung der Bewegung des Transportbandes in den Bereich der Faserablage einströmt, und

c) das Absaugen der Gesamtströmung am Transportband derart erfolgt, dass das die Fasern tragende Gas unter zweifacher Umlenkung einen S-förmigen Weg zum Transportband (41) nimmt, wobei die Strömungsrichtung am Wendepunkt einen Winkel von 0 bis 30° zum Transportband hat.

2. Verfahren nach Anspruch 1, dadurch gekennzeichnet, dass am gekrümmten Leitblech mittels Perforation oder Schlitzen in dem Mass Gas abgesaugt wird, dass die in der Strömung transportierten Fasern gerade noch der Kontur des Leitblechs folgen.

3. Verfahren nach Anspruch 1 oder 2, dadurch gekennzeichnet, dass die Einströmrichtung der Umgebungsluft durch Leitbleche (33) und (34) festgelegt wird.

4. Verfahren nach einem der Ansprüche 1 bis 3, dadurch gekennzeichnet, dass aus dem Einströmbereich der Umgebungsluft Schlichtemittel in den Faserablagebereich eingesprüht werden (35).

5. Verfahren nach einem der Ansprüche 1 bis 4, dadurch gekennzeichnet, dass die 1,5- bis 3fache Gasmenge der die Fasern tragenden Gasmenge unter dem Transportband abgesaugt wird.

6. Verfahren nach einem der Ansprüche 1 bis 5, dadurch gekennzeichnet, dass die durch das Transportband hindurch abgesaugte Gasmenge abschnittsweise in mindestens zwei Sektionen gedrosselt wird, wobei in den ersten, von Fasern noch nicht bedeckten Abschnitten eine mittlere Strömungsgeschwindigkeit durch das Transportband von 1 bis 4 m/s und in den folgenden Abschnitten Geschwindigkeiten von 4 bis 10 m/s eingehalten werden.

7. Vorrichtung zur Durchführung des Verfahrens nach Anspruch 1, enthaltend ein perforiertes Transportband (41), einen in Winkel von 90 bis 150°, vorzugsweise 100 bis 120°, auf das Transportband gerichteten Strömungskanal (2), sowie Vorrichtungen (44, 45) zur Gasabsaugung unterhalb des Transportbandes, wobei zwischen dem Strömungskanal (2) und dem Transportband (41) ein offener Zwischenraum vorhanden ist, durch welchen Umgebungsluft einströmen kann, gekennzeichnet durch einen an einer Seite des Kanals (2) quer zum Transportband (41) angeordneten, in Richtung der Bewegung des Transportbandes gekrümmten Leitkörper (31).

8. Vorrichtung nach Anspruch 7, dadurch gekennzeichnet, dass in dem Kanal (2) Strömungstrennbleche (25) zur Verhinderung von Querströmungen vorgesehen sind.

9. Vorrichtung nach einem der Ansprüche 7 oder 8, dadurch gekennzeichnet, dass der Kanal (2) als Unterschalldiffusor (22) ausgeführt ist.

## Revendications

1. Procédé de fabrication de mats de fibres organiques ou inorganiques, procédé dans lequel des morceaux de fibres dispersés dans un gaz en circulation sortent d'un canal (2) et sont déposés sur une bande transporteuse perforée (41) pour former le mat (42), le gaz étant aspiré en dessous de cette bande transporteuse (41) qui forme un angle de 90 à 150°, de préférence de 100 à 120°, avec le sens d'écoulement du gaz à la sortie du canal, le courant gazeux circulant entre le canal (2) et la bande transporteuse (41) entraînant l'air ambiant ou le gaz recyclé, caractérisé en ce que:

a) dans le prolongement du canal (2), unilatéralement en direction de la bande transporteuse, on dispose un corps de guidage courbe (31) de telle sorte qu'à sa sortie du canal et par suite de l'effet Coanda du corps de guidage, le courant gazeux soit dérivé en direction de la bande transporteuse;

b) sur le côté du canal (2) qui est opposé à la plaque de guidage, entre la bande transporteuse (41) et le bord inférieur du canal (2), l'air ambiant s'écoule dans une direction de 45 à 90° par rapport au sens d'écoulement du gaz à la sortie du canal dans le sens de déplacement de la bande transporteuse dans la zone où les fibres sont déposées, et

c) l'aspiration de tout le courant sur la bande transporteuse a lieu de telle sorte que, moyennant une déviation double, le gaz véhiculant les fibres décrive un parcours en S vers la bande transporteuse (41), le sens d'écoulement décrivant, au point d'inflexion, un angle de 0 à 30° par rapport à la bande transporteuse.

2. Procédé suivant la revendication 1, caractérisé en ce que le gaz est aspiré sur le déflecteur courbe au moyen de perforations ou de fentes dans la mesure où les fibres transportées dans le courant suivent précisément encore le profil de ce déflecteur.

3. Procédé suivant l'une des revendications 1 ou 2, caractérisé en ce que le sens d'écoulement de l'air ambiant est déterminé par des déflecteurs (33) et (34).

4. Procédé suivant une des revendications 1 à 3, caractérisé en ce que, de la zone d'entrée de l'air ambiant, des agents d'ensimage sont pulvérisés dans la zone où se déposent les fibres (35).

5. Procédé suivant une des revendications 1 à 4; caractérisé en ce qu'une quantité de gaz représentant 1,5 à 3 fois la quantité du gaz véhiculant les fibres est aspirée en dessous de la bande transporteuse.

6. Procédé suivant une des revendications 1 à 5, caractérisé en ce que la quantité de gaz aspirée à travers la bande transporteuse est étranglée progressivement en au moins deux sections, une vitesse moyenne d'écoulement de 1 à 4 m/s à travers la bande transporteuse étant maintenue dans les premiers tronçons de celle-ci qui ne sont pas encore recouverts par les fibres, tandis que des vitesses de 4 à 10 m/s sont maintenues dans les tronçons suivants.

7. Dispositif pour la réalisation du procédé suivant la revendication 1, ce dispositif comportant une bande transporteuse perforée (41), un canal d'écoulement (2) dirigé vers la bande transporteuse sous un angle de 90 à 150°, de préférence de 100 à 120°, de même que des dispositifs (44, 45) en vue d'aspirer le gaz en dessous de la bande transporteuse, caractérisé en ce qu'il comprend un corps de guidage courbe (31) disposé sur un côté du canal (2) transversalement par rapport à la bande transporteuse (41) dans le sens de déplacement de cette dernière, un espace intermédiaire ouvert étant ménagé entre le canal d'écoulement (2) et la bande transporteuse (41), l'air ambiant pouvant s'écouler à travers cet espace intermédiaire.

8. Dispositif suivant la revendication 7, caractérisé en ce que des plaques de séparation d'écoulement (25) sont installées dans le canal (2) afin d'empêcher les écoulements transversaux.

9. Dispositif suivant l'une des revendications 7 ou 8, caractérisé en ce que le canal (2) est réalisé sous la forme d'un diffuseur subsonique (22).

## Claims

1. Process for the production of mats made of organic or inorganic fibres, in which sections of fibres dispersed in a flowing gas issue from a channel (2) and are deposited on a perforated conveyor belt (41) for the formation of the mat (42), wherein the gas is removed by suction below the conveyer belt, the conveyer belt (41) forms an angle of 90-150°, preferably 100 to 120°, with the direction of gas flow at the outlet of the channel and the gas flow between the channel (2) and the conveyer belt (41) entrains ambient air or recirculated gas, characterised in that

a) a curved deflection member (31) is positioned on one side of the channel (2), as an extension thereof, in the direction of the conveyor belt such that the gas flow, after issuing from the channel, is deflected in the direction of the conveyor belt by the Coanda effect of the deflection member, and

b) the ambient air on the side of the channel (2) opposite the sheet metal deflector, between the conveyor belt (41) and the lower edge of the channel (2), flows into the region of the fibre deposit in the direction of movement of the conveyor belt and at an angle of 45 to 90° to the direction of gas flow at the channel outlet, and

c) the total flow is removed by suction on the conveyor belt in such a manner that the gas carrying the fibres takes an S-shaped path to the conveyor belt (41) with a double deflection, the direction of flow being at an angle of 0 to 30° with the conveyor belt at the turning point.

2. Process according to claim 1, characterised in that gas is removed by suction at the curved deflector by means of perforations or slits, to the extent that the fibres transported in the flow still just follow the contour of the deflector.

3. Process according to claim 1 or 2, characterised in that the inflow direction of the ambient air is determined by sheet metal deflectors (33) and (34).

4. Process according to one of claims 1 to 3, characterised in that sizing agents are sprayed into the region of fibre deposit from the inflow region of the ambient air.

5. Process according to one of claims 1 to 4, characterised in that the quantity of gas removed by suction below the conveyor belt is 1.5 to 3 times the quantity of gas carrying the fibres.

6. Process according to one of claims 1 to 5, characterised in that the quantity of gas removed by suction through the conveyor belt is throttled in stages into at least two sections, an average rate of flow through the conveyor belt of 1 to 4 m/s being achieved in the first sections which are not yet covered with fibres and rates of 4 to 10 m/s being achieved in the following sections.

7. An apparatus for carrying out the process according to claim 1, containing a perforated conveyor belt (41), a flow channel (2) directed towards the conveyor belt at an angle of 90 to 150°, preferably 100 to 120°, and devices (44, 45) for removing the gas by suction below the conveyor belt, an open intermediate space being present between the flow channel (2) and the conveyor belt (41) through which ambient air can flow, characterised by a deflection member (31) which is positioned on one side of the channel (2) transversely to the conveyor belt (41) and is curved in the direction of the movement of the conveyor belt.

8. Apparatus according to claim 7, characterised in that flow-dividing plates (25) are provided in the channel (2) for the prevention of transverse flows.

9. Apparatus according to one of claims 7 or 8, characterised in that the channel (2) is designed as a subsonic diffuser (22).

FIG. 1

0 040 693

FIG. 2

FIG. 3

FIG. 4